# EUROPEAN PATENT APPLICATION

(11) **EP 2 579 181 A1**
(43) Date of publication of application: **10.04.2013**
(21) Application number: 12150477.3
(22) Date of filing: 09.01.2012
(51) Int. Cl.: G06K 7/10

(54) **Barcode scanner apparatus and mode-switching method for the same**

(30) Priority: 05.10.2011 TW 100136032
(71) Applicant: Champtek Incorporated, Hsin-Tien City 231 Taipei (TW)
(72) Inventor: Wang, Kuo-Chun, New Taipei City (TW); Huang, Shu-Ying, New Taipei City (TW)
(74) Representative: 2K Patentanwälte Blasberg Kewitz & Reichel

(57) **Abstract**

A barcode scanner apparatus (10) includes a scanner button unit (118), a double-click detecting unit (104), a scanner control-process unit (106), and a scanner light-emitting unit (108). A switching signal (120) is sent from the double-click detecting unit (104) to the scanner control-process unit (106) when a double click for the scanner button unit (118) is detected by the double-click detecting unit (104) in a predetermined time. Therefore, the scanning light-emitting mode of the scanner light-emitting unit (108) is switched by the scanner control-process unit (106) from single line mode to multi-line mode or from multi-line mode to single line mode.

## Description

### BACKGROUND OF THE INVENTION

### FIELD OF THE INVENTION

The present invention relates to a scanner apparatus and mode-switching method for the same, and especially relates to a barcode scanner apparatus and mode-switching method for the same.

### DESCRIPTION OF PRIOR ART

Barcodes are used widely for managing the process of products in commerce and industry. The machine for reading barcodes is called barcode scanner.

After a barcode label pasted on the product or on the box of the product is scanned by the barcode scanner, the barcode information is transmitted to a computer or a database, so that managing the process of the product is easy.

There are two types of scanning light-emitting modes for the conventional barcode scanner. They are single line mode and multi-line mode. Both of them have advantages and are used widely.

The single line mode emits one scanning light at one time, so that it is useful when a lot of barcodes are arranged closely. For example, a lot of barcodes are arranged closely on one paper, and the distance between two adjacent barcodes is narrow. The single line mode avoids emitting the scanning light onto the barcode which is not the target barcode.

The multi-line mode emits a plurality of scanning lights at one time, so that it is useful when there is only one barcode. The advantage of the multi-line mode is that the barcode scanner is not required to aim the target barcode accurately, because the barcode scanner emits a plurality of scanning lights from various angles.

Both of the single line mode and the multi-line mode are used widely, but it is a pity that there is no such product that combines both of them and switches between them easily (sometimes the single line mode is required, but sometimes the multi-line mode is required).

### SUMMARY OF THE INVENTION

In order to solve the above-mentioned problems, an object of the present invention is to provide a barcode scanner apparatus to switch between the single line mode and the multi-line mode easily.

In order to solve the above-mentioned problems, another object of the present invention is to provide a mode-switching method for barcode scanner apparatus to switch between the single line mode and the multi-line mode easily.

In order to achieve the object of the present invention mentioned above, the barcode scanner apparatus of the present invention includes a scanner button unit, a double-click detecting unit electrically connected to the scanner button unit, a scanner control-process unit electrically connected to the double-click detecting unit and the scanner button unit, and a scanner light-emitting unit electrically connected to the scanner control-process unit. A switching signal is sent from the double-click detecting unit to the scanner control-process unit when a double click for the scanner button unit is detected by the double-click detecting unit in a predetermined time. The scanner light-emitting unit is controlled by the scanner control-process unit to change the scanning light-emitting mode from single line mode to multi-line mode when the switching signal is received by the scanner control-process unit and the scanning light-emitting mode of the scanner light-emitting unit is single line mode. The scanner light-emitting unit is controlled by the scanner control-process unit to change the scanning light-emitting mode from multi-line mode to single line mode when the switching signal is received by the scanner control-process unit and the scanning light-emitting mode of the scanner light-emitting unit is multi-line mode. The scanner light-emitting unit is controlled by the scanner control-process unit to emit light to scan when the scanner button unit is pressed only one time in the predetermined time.

In order to achieve another object of the present invention mentioned above, the mode-switching method for barcode scanner apparatus of the present invention includes following steps. A switching signal is sent from a double-click detecting unit of a barcode scanner apparatus to a scanner control-process unit of the barcode scanner apparatus when a double click for a scanner button unit of the barcode scanner apparatus is detected by the double-click detecting unit in a predetermined time. A scanner light-emitting unit of the barcode scanner apparatus is controlled by the scanner control-process unit to change the scanning light-emitting mode from single line mode to multi-line mode when the switching signal is received by the scanner control-process unit and the scanning light-emitting mode of the scanner light-emitting unit is single line mode. The scanner light-emitting unit is controlled by the scanner control-process unit to change the scanning light-emitting mode from single line mode to multi-line mode when the switching signal is received by the scanner control-process unit and the scanning light-emitting mode of the scanner light-emitting unit is single line mode. The scanner light-emitting unit is controlled by the scanner control-process unit to emit light to scan when the scanner button unit is pressed only one time in the predetermined time.

The efficiency of the present invention is to switch between single line mode and multi-line mode easily for a barcode scanner apparatus.

### BRIEF DESCRIPTION OF DRAWING

Fig. 1 shows a block diagram of the barcode scanner apparatus of the present invention.
Fig. 2 shows a flow chart of the mode-switching method for barcode scanner apparatus of the present invention.
Fig. 3 shows a diagram of an embodiment of the barcode scanner apparatus of the present invention.

### DETAILED DESCRIPTION OF THE INVENTION

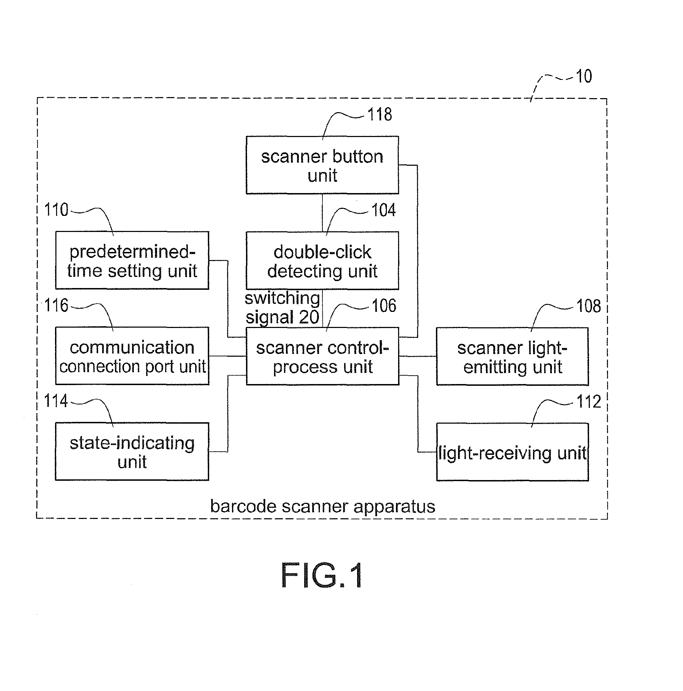

Fig. 1 shows a block diagram of the barcode scanner apparatus of the present invention. The barcode scanner apparatus 10 of the present invention includes a double-click detecting unit 104, a scanner control-process unit 106, a scanner light-emitting unit 108, a predetermined-time setting unit 110, a light-receiving unit 112, a state-indicating unit 114, a communication connection port unit 116, and a scanner button unit 118. The double-click detecting unit 104 and the scanner control-process unit 106 could be two independent units or be combined in one unit.

The scanner control-process unit 106 is electrically connected to the double-click detecting unit 104, the scanner light-emitting unit 108, the predetermined-time setting unit 110, the light-receiving unit 112, the state-indicating unit 114, the communication connection port unit 116, and the scanner button unit 118. The scanner button unit 118 is electrically connected to the double-click detecting unit 104

A switching signal 120 is sent from the double-click detecting unit 104 to the scanner control-process unit 106 when a double click for the scanner button unit 118 is detected by the double-click detecting unit 104 in a predetermined time.

The scanner light-emitting unit 108 is controlled by the scanner control-process unit 106 to change the scanning light-emitting mode from single line mode to multi-line mode when the switching signal 120 is received by the scanner control-process unit 106 and the scanning light-emitting mode of the scanner light-emitting unit 108 is single line mode.

The scanner light-emitting unit 108 is controlled by the scanner control-process unit 106 to change the scanning light-emitting mode from multi-line mode to single line mode when the switching signal 120 is received by the scanner control-process unit 106 and the scanning light-emitting mode of the scanner light-emitting unit 108 is multi-line mode.

The predetermined-time setting unit 110 is used to set the predetermined time (the predetermined time could be less than or equal to 1 second). In an embodiment, the predetermined-time setting unit 110 could be a knob and related circuit. Symbols 0 to 9 are marked on the housing of the barcode scanner apparatus 10, and are marked in accordance with the position of the knob of the barcode scanner apparatus 10. The predetermined time is 1 second when the knob indicates symbol 0, and the predetermined time is 0.1 second when the knob indicates symbol 1, and the predetermined time is 0.2 second when the knob indicates symbol 2, and so on. Beside the knob and related circuit mentioned above, the predetermined-time setting unit 110 could be achieved by setting software.

The state-indicating unit 114 is used to indicate the scanning light-emitting mode of the scanner light-emitting unit 108. In an embodiment, the state-indicating unit 114 includes a green light-emitting diode and a red light-emitting diode. The green light-emitting diode is lighted up when the scanning light-emitting mode of the scanner light-emitting unit 108 is single line mode. The red light-emitting diode is lighted up when the scanning light-emitting mode of the scanner light-emitting unit 108 is multi-line mode. In another embodiment, the state-indicating unit 114 is not required for the present invention, and a user may look at and check the scanning light(s) then identify the scanning light-emitting mode of the scanner light-emitting unit 108.

The light-receiving unit 112 is used to receive the light which is emitted from the scanner light-emitting unit 108 to a barcode (not shown in the Fig.) then reflected from the barcode. The scanner light-emitting unit 108 is controlled by the scanner control-process unit 106 to emit light to scan (namely, the scanning function of a conventional barcode scanner) when the scanner button unit 118 is pressed only one time (not a double click) in the predetermined time. The communication connection port unit 116 (for example, a universal serial bus) is used to connect to a computer (not shown in the Fig.) or a database (not shown in the Fig.).

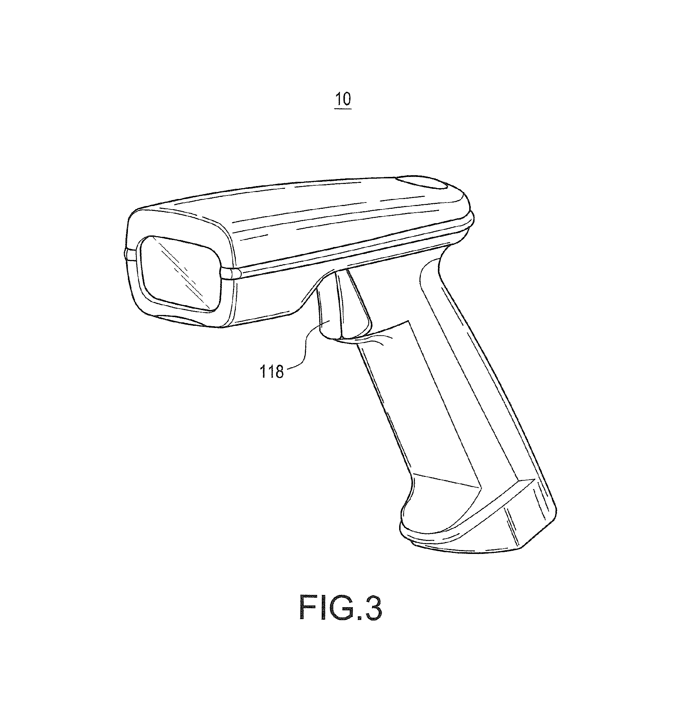

Fig. 3 shows a diagram of an embodiment of the barcode scanner apparatus of the present invention.

The barcode scanner apparatus of the present invention uses the original scanner button unit of the barcode scanner to switch the scanning light-emitting mode. The scanning light-emitting mode is switched from single line mode to multi-line mode or from multi-line mode to single line mode when a double click for the scanner button unit is detected in the predetermined time. The scanner light-emitting unit is controlled to emit light to scan (namely, the scanning function of a conventional barcode scanner) when the scanner button unit is pressed only one time (not a double click) in the predetermined time.

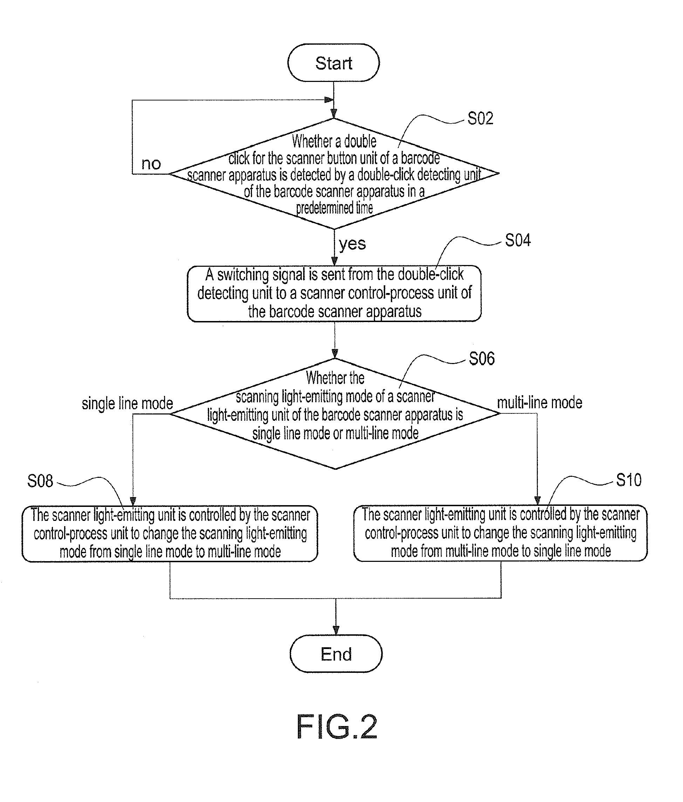

Fig. 2 shows a flow chart of the mode-switching method for barcode scanner apparatus of the present invention. The mode-switching method for barcode scanner apparatus of the present invention includes following steps.

S02: Whether a double click for the scanner button unit of a barcode scanner apparatus is detected by a double-click detecting unit of the barcode scanner apparatus in a predetermined time. If yes, the process goes to step 04. If not, a double click for the scanner button unit is detected continuously by the double-click detecting unit.

S04: A switching signal is sent from the double-click detecting unit to a scanner control-process unit of the barcode scanner apparatus. Then the process goes to step 06.

S06: Whether the scanning light-emitting mode of a scanner light-emitting unit of the barcode scanner apparatus is single line mode or multi-line mode. If the scanning light-emitting mode is single line mode, the process goes to step 08. If the scanning light-emitting mode is multi-line mode, the process goes to step 10.

S08: The scanner light-emitting unit is controlled by the scanner control-process unit to change the scanning light-emitting mode from single line mode to multi-line mode.

S10: The scanner light-emitting unit is controlled by the scanner control-process unit to change the scanning light-emitting mode from multi-line mode to single line mode.

The mode-switching method for barcode scanner apparatus further includes following steps. A predetermined-time setting unit electrically connected to the scanner control-process unit is provided. A light-receiving unit electrically connected to the scanner control-process unit is provided. A state-indicating unit electrically connected to the scanner control-process unit is provided. A communication connection port unit electrically connected to the scanner control-process unit is provided.

Moreover, the double-click detecting unit and the scanner control-process unit could be two independent units or be combined in one unit.

Moreover, the predetermined-time setting unit is used to set the predetermined time (the predetermined time could be less than or equal to 1 second). In an embodiment, the predetermined-time setting unit could be a knob and related circuit. Symbols 0 to 9 are marked on the housing of the barcode scanner apparatus, and are marked in accordance with the position of the knob of the barcode scanner apparatus. The predetermined time is 1 second when the knob indicates symbol 0, and the predetermined time is 0.1 second when the knob indicates symbol 1, and the predetermined time is 0.2 second when the knob indicates symbol 2, and so on. Beside the knob and related circuit mentioned above, the predetermined-time setting unit 110 could be achieved by setting software.

The state-indicating unit is used to indicate the scanning light-emitting mode of the scanner light-emitting unit. In an embodiment, the state-indicating unit includes a green light-emitting diode and a red light-emitting diode. The green light-emitting diode is lighted up when the scanning light-emitting mode of the scanner light-emitting unit is single line mode. The red light-emitting diode is lighted up when the scanning light-emitting mode of the scanner light-emitting unit is multi-line mode. In another embodiment, the state-indicating unit is not required for the present invention, and a user may look at and check the scanning light(s) then identify the scanning light-emitting mode of the scanner light-emitting unit.

The light-receiving unit is used to receive the light which is emitted from the scanner light-emitting unit to a barcode then reflected from the barcode. The scanner light-emitting unit is controlled by the scanner control-process unit to emit light to scan (namely, the scanning function of a conventional barcode scanner) when the scanner button unit is pressed only one time (not a double click) in the predetermined time. The communication connection port unit (for example, a universal serial bus) is used to connect to a computer or a database.

In summary there is disclosed a barcode scanner apparatus including a scanner button unit, a double-click detecting unit, a scanner control-process unit, and a scanner light-emitting unit. A switching signal is sent from the double-click detecting unit to the scanner control-process unit when a double click for the scanner button unit is detected by the double-click detecting unit in a predetermined time. Therefore, the scanning light-emitting mode of the scanner light-emitting unit is switched by the scanner control-process unit from single line mode to multi-line mode or from multi-line mode to single line mode.

The mode-switching method for barcode scanner apparatus of the present invention uses the original scanner button unit of the barcode scanner to switch the scanning light-emitting mode. The scanning light-emitting mode is switched from single line mode to multi-line mode or from multi-line mode to single line mode when a double click for the scanner button unit is detected in the predetermined time. The scanner light-emitting unit is controlled to emit light to scan (namely, the scanning function of a conventional barcode scanner) when the scanner button unit is pressed only one time (not a double click) in the predetermined time.

## Claims

1. A barcode scanner apparatus (10) including:
a scanner button unit (118);
a double-click detecting unit (104) electrically connected to the scanner button unit (118);
a scanner control-process unit (106) electrically connected to the double-click detecting unit (104) and the scanner button unit (118); and
a scanner light-emitting unit (108) electrically connected to the scanner control-process unit (106),
wherein a switching signal (120) is sent from the double-click detecting unit (104) to the scanner control-process unit (106) when a double click for the scanner button unit (118) is detected by the double-click detecting unit (104) in a predetermined time, wherein the scanner light-emitting unit (108) is controlled by the scanner control-process unit (106) to change the scanning light-emitting mode from single line mode to multi-line mode when the switching signal (120) is received by the scanner control-process unit (106) and the scanning light-emitting mode of the scanner light-emitting unit (108) is single line mode, wherein the scanner light-emitting unit (108) is controlled by the scanner control-process unit (106) to change the scanning light-emitting mode from multi-line mode to single line mode when the switching signal (120) is received by the scanner control-process unit (106) and the scanning light-emitting mode of the scanner light-emitting unit (108) is multi-line mode, wherein the scanner light-emitting unit (108) is controlled by the scanner control-process unit (106) to emit light to scan when the scanner button unit (118) is pressed only one time in the predetermined time.

2. The barcode scanner apparatus (10) in claim 1, further including a predetermined-time setting unit (110) electrically connected to the scanner control-process unit (106), wherein the predetermined-time setting unit (110) is used to set the predetermined time.

3. The barcode scanner apparatus (10) in claim 2, further including a light-receiving unit (112) electrically connected to the scanner control-process unit (106).

4. The barcode scanner apparatus (10) in claim 3, further including a state-indicating unit (114) electrically connected to the scanner control-process unit (106), wherein the state-indicating unit (114) is used to indicate the scanning light-emitting mode of the scanner light-emitting unit (108).

5. The barcode scanner apparatus (10) in claim 4, further including a communication connection port unit (116) electrically connected to the scanner control-process unit (106).

6. A mode-switching method for barcode scanner apparatus (10) including following steps:
a. a double-click detecting unit (104) of a barcode scanner apparatus (10) sending a switching signal (120) to a scanner control-process unit (106) of the barcode scanner apparatus (10) when a double click for a scanner button unit (118) of the barcode scanner apparatus (10) is detected by the double-click detecting unit (104) in a predetermined time;
b. the scanner control-process unit (106) controlling a scanner light-emitting unit (108) of the barcode scanner apparatus (10) to change the scanning light-emitting mode from single line mode to multi-line mode when the switching signal (120) is received by the scanner control-process unit (106) and the scanning light-emitting mode of the scanner light-emitting unit (108) is single line mode; and
c. the scanner control-process unit (106) controlling the scanner light-emitting unit (108) to change the scanning light-emitting mode from multi-line mode to single line mode when the switching signal (120) is received by the scanner control-process unit (106) and the scanning light-emitting mode of the scanner light-emitting unit (108) is multi-line mode, wherein the scanner light-emitting unit (108) is controlled by the scanner control-process unit (106) to emit light to scan when the scanner button unit (118) is pressed only one time in the predetermined time.

7. The mode-switching method for barcode scanner apparatus (10) in claim 6, further including:
providing a predetermined-time setting unit (110) electrically connected to the scanner control-process unit (106), wherein the predetermined-time setting unit (110) is used to set the predetermined time.

8. The mode-switching method for barcode scanner apparatus (10) in claim 7, further including:
providing a light-receiving unit (112) electrically connected to the scanner control-process unit (106).

9. The mode-switching method for barcode scanner apparatus (10) in claim 8, further including:
providing a state-indicating unit (114) electrically connected to the scanner control-process unit (106), wherein the state-indicating unit (114) is used to indicate the scanning light-emitting mode of the scanner light-emitting unit (108).

10. The mode-switching method for barcode scanner apparatus (10) in claim 9, further including:
providing a communication connection port unit (116) electrically connected to the scanner control-process unit (106).
